# EUROPÄISCHE PATENTSCHRIFT

(11) **EP 2 857 751 B1**
(45) Veröffentlichungstag und Bekanntmachung des Hinweises auf die Patenterteilung: **05.06.2019**
(21) Anmeldenummer: 14187260.6
(22) Anmeldetag: 01.10.2014
(51) Int. Cl.: F24C 3/00, F16L 3/13

(54) **Gasherd mit eine Befestigungseinrichtung zum verdrehsicheren Befestigen der Hauptgasleitung an der Kochmuldenwanne**
Gas stove with fixing device for securing the main line, in a rotationally secure manner, to the stovetop tub
Fourneau à gaz avec dispositif de fixation destiné à la fixation antigiratoire de la conduite principale de gaz sur le bac de feu de cuisson

(30) Priorität: 02.10.2013 ES 201331447
(43) Veröffentlichungstag der Anmeldung: 08.04.2015
(73) Patentinhaber: BSH Hausgeräte GmbH, 81739 München (DE)
(72) Erfinder: Palacios Valdueza, Luis Antonio, 39610 Astillero (ES); Placer Maruri, Emilio, 39120 Liencres (ES); Saiz Gonzalez, Roberto, 39539 Santander (ES)

(56) Entgegenhaltungen:
- EP-A2- 1 275 890
- US-A- 4 826 114
- US-A- 5 547 152
- US-A- 5 839 703
- US-A1- 2006 151 996

## Beschreibung

Die vorliegende Erfindung betrifft eine Befestigungseinrichtung zum verdrehsicheren Befestigen einer Leitung an einem Gehäuse eines Haushaltsgerätes, eine Befestigungsanordnung für ein Haushaltsgerät und ein Haushaltsgerät
Ein Haushaltsgerät wie beispielsweise ein Gasherd kann eine Leitung, insbesondere eine sogenannte Hauptgasleitung, aufweisen. An der Hauptgasleitung können Gasregelventile angeordnet sein, von denen Gaszufuhrleitungen zu den Gasbrennern des Gasherdes führen.

Die US 5,839,703 A beschreibt eine Befestigungsanordnung für ein Haushaltsgerät mit einer Gasleitung und einer Befestigungseinrichtung zum verdrehsicheren Befestigen der Gasleitung an dem Haushaltsgerät.

Die US 2006/0151996 A1 beschreibt eine Befestigungsschelle zum Befestigen eines Gasventils an einer Gasleitung. Die Gasleitung ist zwischen dem Gasventil und der Befestigungsschelle eingeklemmt.

Die EP 1 275 890 A2 beschreibt eine Rohrbefestigung mit einem Rohr und einer Befestigungseinrichtung zum verdrehsicheren Befestigen des Rohrs. Die Befestigungseinrichtung umfasst Schnapphaken, mit denen die Befestigungseinrichtung an einem Gehäuse befestigbar ist.

Vor diesem Hintergrund besteht eine Aufgabe der vorliegenden Erfindung darin, einen verbesserten Gasherd zur Verfügung zu stellen.

Demgemäß wird ein Gasherd mit einer Kochmuldenwanne und einer Befestigungsanordnung vorgeschlagen. Die Befestigungsanordnung umfasst eine Hauptgasleitung und eine Befestigungseinrichtung zum verdrehsicheren Befestigen der Hauptgasleitung an der Kochmuldenwanne. Die Befestigungseinrichtung weist einen Aufnahmeabschnitt zum Aufnehmen der Hauptgasleitung auf, wobei der Aufnahmeabschnitt einen Verdrehsicherungsabschnitt aufweist, der ein Verdrehen der Hauptgasleitung relativ zu dem Aufnahmeabschnitt verhindert, wobei die Befestigungseinrichtung außenseitig an der Kochmuldenwanne befestigt ist, wobei die Hauptgasleitung durch eine an der Kochmuldenwanne vorgesehene Öffnung hindurchgeführt ist, und wobei die Befestigungseinrichtung von außen in die Öffnung eingeschnappt ist.

An der Hauptgasleitung können Gasregelventile angeordnet sein. Dadurch, dass der Verdrehsicherungsabschnitt ein Verdrehen der Leitung relativ zu dem Aufnahmeabschnitt verhindert, wird eine Relativbewegung der Leitung, beispielsweise bei der Installation oder Reparatur des Haushaltsgerätes, relativ zu den Gasregelventilen unterbunden. Hierdurch wird das Auftreten von Leckagen am Übergang zwischen der Leitung und den Gasregelventilen verhindert.

Gemäß einer Ausführungsform weist der Aufnahmeabschnitt zumindest abschnittsweise eine Kreisbogenform auf.

Der Aufnahmeabschnitt weist vorzugsweise eine zylinderförmige Auflagefläche für die Leitung auf. Vorzugsweise ist der Aufnahmeabschnitt dazu eingerichtet, die Leitung zumindest abschnittsweise formschlüssig zu umgreifen. Der Aufnahmeabschnitt kann elastisch verformbar sein. Hierdurch kann die Leitung in den Aufnahmeabschnitt eingedrückt werden, wodurch ein sicherer Halt der Leitung gewährleistet ist.

Gemäß einer weiteren Ausführungsform ist der Verdrehsicherungsabschnitt eine Sehne der Kreisbogenform des Aufnahmeabschnitts.

Der Verdrehsicherungsabschnitt kann eine beliebige Symmetrieunterbrechung des Aufnahmeabschnittes sein. Insbesondere kann der Verdrehsicherungsabschnitt eine Vorwölbung oder Ausnehmung des Aufnahmeabschnittes sein. Der Verdrehsicherungsabschnitt verhindert zuverlässig ein Verdrehen der Leitung relativ zu dem Aufnahmeabschnitt.

Gemäß einer weiteren Ausführungsform weist die Befestigungseinrichtung zumindest ein Befestigungselement zum Befestigen der Befestigungseinrichtung an der Kochmuldenwanne auf.

Die Befestigungseinrichtung kann mehrere Befestigungselemente aufweisen. Das zumindest eine Befestigungselement kann beispielsweise eine Schraube, ein Niet oder dergleichen sein. Mit Hilfe des Befestigungselementes ist eine schnelle und komfortable Montage der Befestigungseinrichtung an dem Gehäuse des Haushaltsgerätes gewährleistet.

Gemäß einer weiteren Ausführungsform ist das Befestigungselement ein Schnapphaken. Der Schnapphaken ist vorzugsweise federelastisch verformbar. Der Schnapphaken kann materialeinstückig mit der Befestigungseinrichtung ausgebildet sein. Vorzugsweise sind mehrere, beispielsweise zwei oder drei Schnapphaken vorgesehen. Die Schnapphaken können gleichmäßig über einen Umfang der Befestigungseinrichtung verteilt angeordnet sein. An der Kochmuldenwanne ist eine Öffnung vorgesehen, durch die die Leitung geführt ist. Die Befestigungseinrichtung ist dazu eingerichtet, an der Öffnung der Kochmuldenwanne verdrehsicher befestigt zu werden. Die Befestigungselemente ermöglichen eine verdrehsichere Montage der Befestigungseinrichtung an der Kochmuldenwanne, wobei an der Öffnung Ausnehmungen vorgesehen sein können, in die die Befestigungselemente einschnappbar sind. Die Leitung ist mit Hilfe des Verdrehsicherungsabschnitts verdrehfest gegenüber der Befestigungseinrichtung montierbar ist. Hierdurch wird eine Verdrehung der Leitung gegenüber der Kochmuldenwanne zuverlässig verhindert.

Gemäß einer weiteren Ausführungsform weist die Befestigungseinrichtung zumindest eine Versteifungsrippe zum Versteifen der Befestigungseinrichtung auf.

Insbesondere weist die Befestigungseinrichtung mehrere Versteifungsrippen auf. Die zumindest eine Versteifungsrippe verhindert eine Verformung der Befestigungseinrichtung beispielsweise bei einer Rotationsbeanspruchung der Leitung. Ferner ermöglicht die zumindest eine Versteifungsrippe eine Materialersparnis bei der Herstellung der Befestigungseinrichtung.

Gemäß einer weiteren Ausführungsform weist der Aufnahmeabschnitt zumindest eine Einführschräge zum Einführen der Leitung in den Aufnahmeabschnitt auf.

Die Einführschräge kann eine Anfasung des Aufnahmeabschnittes sein. Mit Hilfe der Einführschräge wird das Aufnehmen der Leitung von dem Aufnahmeabschnitt erleichtert. Dies erhöht den Komfort bei der Montage der Leitung an der Befestigungseinrichtung.

Gemäß einer weiteren Ausführungsform ist der Verdrehsicherungsabschnitt dazu eingerichtet, die Leitung formschlüssig zu umgreifen.

Der Verdrehsicherungsabschnitt ist vorzugsweise elastisch verformbar. Hierdurch wird ein Herausrutschen der Leitung aus dem Aufnahmeabschnitt zuverlässig verhindert.

Gemäß einer weiteren Ausführungsform weist der Verdrehsicherungsabschnitt zwei Greifarme auf, die dazu eingerichtet sind, die Leitung zumindest abschnittsweise zu umgreifen.

Die Greifarme sind insbesondere elastisch verformbar. Die Greifarme können jeweils einen Greifabschnitt aufweisen, der in einen Eingriffsabschnitt der Leitung derart eingreift, dass diese in ihrer Axialrichtung unverschieblich ist. Hierdurch ist eine besonders gute Befestigung der Leitung gewährleistet.

Gemäß einer weiteren Ausführungsform sind der Aufnahmeabschnitt und/oder der Verdrehsicherungsabschnitt elastisch verformbar.

Vorzugsweise werden der Aufnahmeabschnitt und/oder der Verdrehsicherungsabschnitt beim Eindrücken der Leitung in den Aufnahmeabschnitt verformt. Insbesondere sind der Aufnahmeabschnitt und/oder der Verdrehsicherungsabschnitt unter einer Vorspannung wenn die Leitung in dem Aufnahmeabschnitt aufgenommen ist. Hierdurch ist ein sicherer Halt der Leitung gewährleistet. Vorzugsweise ist die Befestigungseinrichtung materialeinstückig. Insbesondere ist die Befestigungseinrichtung zumindest teilweise aus einem Kunststoffmaterial gefertigt. Insbesondere ist die Befestigungseinrichtung ein Kunststoffspritzgussteil. Dies ermöglicht eine kostengünstige Herstellbarkeit der Befestigungseinrichtung in großen Stückzahlen.

Die Befestigungsanordnung weist die Hauptgasleitung und die Befestigungseinrichtung auf.

Die Leitung ist eine Hauptgasleitung eines Gasherds.

Gemäß einer Ausführungsform weist die Leitung einen zu dem Verdrehsicherungsabschnitt korrespondierenden Eingriffsabschnitt auf.

Der Verdrehsicherungsabschnitt greift bevorzugt formschlüssig in den Eingriffsabschnitt der Leitung ein. Hierdurch wird eine besonders gute Verdrehsicherung der Leitung erzielt. Vorzugsweise ist der Eingriffsabschnitt eine seitliche Abflachung der Leitung. Der Eingriffsabschnitt kann eine Vertiefung oder Vorwölbung der Leitung sein, in die der Verdrehsicherungsabschnitt formschlüssig eingreift. Der Eingriffsabschnitt kann eine mit der Leitung verbundene, insbesondere verklebte, verschweißte, aufgepresste oder verlötete, Hülse sein, die eine zu dem Verdrehsicherungsabschnitt korrespondierende Geometrie aufweist.

Die Befestigungseinrichtung ist außenseitig an einer Kochmuldenwanne des Haushaltsgeräts befestigt.

Hierdurch ist eine besonders einfache Montage der Befestigungseinrichtung möglich. Vorzugsweise ist an der Kochmuldenwanne eine Öffnung vorgesehen, in die die Befestigungseinrichtung insbesondere von außen in die Kochmuldenwanne einschnappbar ist. Die durch die Öffnung geführte Leitung ist mit Hilfe des Verdrehsicherungsabschnitts verdrehfest gegenüber der Befestigungseinrichtung montierbar, wobei die Befestigungseinrichtung mit Hilfe der Befestigungselemente verdrehfest an der Kochmuldenwanne befestigt ist. Hierdurch wird eine Verdrehung der Leitung gegenüber der Kochmuldenwanne auch dann zuverlässig verhindert wenn an die Leitung z.B. ein Anschlussstutzen zur Verbindung der Leitung mit dem Gasnetz angeschraubt wird.

Der Gasherd umfasst die Befestigungseinrichtung und die Befestigungsanordnung, welche die Kochmuldenwanne mit Öffnung, die Hauptgasleitung und die Befestigungseinrichtung aufweist.

Die Leitung ist vorzugsweise durch eine in einer Ecke einer Muldenwanne einer Kochmulde des Haushaltsgerätes angeordnete Öffnung in die Muldenwanne geführt. Die Leitung kann mit Hilfe der Gasregelventile an der Muldenwanne befestigt sein. Die Befestigungseinrichtung ist z.B. im Bereich der Öffnung der Muldenwanne, in der Wanne angeordnet.

Gemäß einer Ausführungsform weist das Haushaltsgerät eine Kochmuldenwanne auf, wobei die Befestigungseinrichtung einen äußeren Anschmiegeabschnitt umfasst, welcher mit einer Kochmuldenwannenkontur korrespondiert.

In Ausführungsformen verläuft die Hauptgasleitung innerhalb der Kochmuldenwanne zwischen Gasregelventilen zum Einstellen eines jeweiligen Gasstroms zu den Gasbrennern und einer seitlichen Wand der Kochmuldenwanne. Beispielsweise ist die Hauptgasleitung innerhalb der Kochmuldenwanne ausschließlich ein gerades Rohrstück. Der Eingriffsabschnitt kann zwischen der Öffnung in der Kochmuldenwanne und den angekoppelten Gasregelventilen angeordnet sein.

Die Gasventile können mit Bedienelementen versehen sein, welche oberseitig der Kochmulde und seitlich von den Kochstellen angeordnet sind. In Ausführungsformen eines Gasherdes sind die Gasregelventile und/oder die Bedienelemente an einer linken oder rechten Seite des Kochfeldes. Vorzugsweise sind die Bedienelemente von einem Bediener aus gesehen nicht an einer dem Bediener zugewandten Seite des Gaskochfeldes vorgesehen, sondern seitlich.

Die Kochmulde des Haushaltsgerätes weist die Kochmuldenwanne auf. An oder auf der Kochmuldenwanne können Gasbrenner des Haushaltsgerätes montiert sein. Die Kochmuldenwannenkontur kann eine Abrundung aufweisen. Der Verdrehsicherungsabschnitt kann der Kochmuldenwannenkontur, insbesondere einer seitlichen Wand der Kochmuldenwannenkontur, zugewandt sein. Hierdurch wird ein Herausrutschen der Leitung aus dem Aufnahmeabschnitt zuverlässig verhindert. Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt eine schematische perspektivische Ansicht einer Ausführungsform eines Haushaltsgerätes;
- Fig. 2: zeigt eine schematische perspektivische Ansicht einer nicht erfindungsgemäßen Ausführungsform einer Befestigungseinrichtung für eine Leitung des Haushaltsgerätes gemäß der Fig. 1;
- Fig. 3: zeigt eine schematische Seitenansicht einer nicht erfindungsgemäßen Ausführungsform einer Befestigungsanordnung mit der Befestigungseinrichtung gemäß der Fig. 2;
- Fig. 4: zeigt eine schematische perspektivische Ansicht einer weiteren nicht erfindungsgemäßen Ausführungsform eines Haushaltsgerätes;
- Fig. 5: zeigt eine schematische perspektivische Ansicht einer weiteren nicht erfindungsgemäßen Ausführungsform einer Befestigungseinrichtung für eine Leitung des Haushaltsgerätes gemäß der Fig. 4;
- Fig. 6: zeigt eine schematische Seitenansicht der Befestigungseinrichtung gemäß der Fig. 5;
- Fig. 7: zeigt eine schematische perspektivische Ansicht einer weiteren nicht erfindungsgemäßen Ausführungsform einer Befestigungsanordnung mit der Befestigungseinrichtung gemäß der Fig. 5 und 6;
- Fig. 8: zeigt eine schematische perspektivische Ansicht einer erfindungsgemäßen Ausführungsform einer Befestigungseinrichtung;
- Fig. 9: zeigt eine weitere schematische Ansicht der Befestigungseinrichtung gemäß der Fig. 8;
- Fig. 10: zeigt eine schematische perspektivische Ansicht einer Ausführungsform eines Haushaltsgeräts mit einer Befestigungseinrichtung gemäß den Fig. 8 und 9;
- Fig. 11: zeigt eine schematische Ansicht einer in einer Kochmuldenwanne des Haushaltsgeräts gemäß der Fig. 10 vorgesehenen Öffnung;
- Fig. 12: zeigt schematisch die Montage einer Ausführungsform einer Befestigungsanordnung;
- Fig. 13: zeigt schematisch die Montage der Befestigungsanordnung gemäß der Fig. 12 an eine Kochmuldenwanne des Haushaltsgeräts gemäß der Fig. 10;
- Fig. 14: zeigt eine vergrößerte schematische Ansicht der Kochmuldenwanne gemäß der Fig. 13; und
- Fig. 15: zeigt eine schematische perspektivische Ansicht einer Leitung des Haushaltsgeräts gemäß der Fig. 1.

In den Figuren sind gleiche oder funktionsgleiche Elemente mit denselben Bezugszeichen versehen worden, sofern nichts anderes angegeben ist.

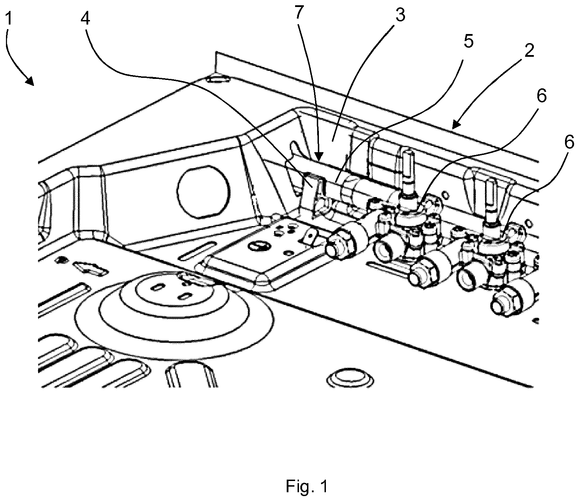

Die Fig. 1 zeigt eine schematische perspektivische Ansicht eines Haushaltsgerätes 1. Das Haushaltsgerät 1 ist insbesondere ein Gasherd. Das Haushaltsgerät weist ein Gehäuse 2 auf. Das Gehäuse 2 kann eine Kochmulde mit einer Kochmuldenwanne 3 aufweisen.

Die Fig. 1 zeigt weiterhin eine Befestigungseinrichtung 4 zum verdrehsicheren Befestigen einer Leitung 5 an dem Gehäuse 2, insbesondere an der Kochmuldenwanne 3. Die Leitung 5 ist insbesondere eine Gasleitung. Die Leitung 5 kann eine Hauptgasleitung des Haushaltsgerätes 1 sein, an der mehrere Gasregelventile 6 vorgesehen sein können. Mittels der Gasregelventile 6 kann Gas aus der Leitung 5 Gasbrennern des Haushaltsgerätes 1 zugeführt werden. Das Gas kann beispielsweise Erdgas, Stadtgas, Propangas oder dergleichen sein. Eine Befestigungsanordnung 7 kann die Befestigungseinrichtung 4 und die Leitung 5 aufweisen. Innerhalb der Kochmuldenwanne 3 ist die Hauptgasleitung 5 ein gerades Rohrstück, das keine Umlenkung, wie einen Winkel, aufweist.

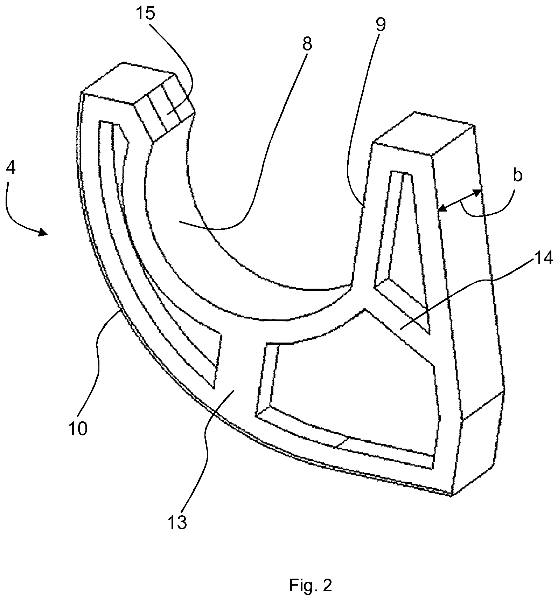

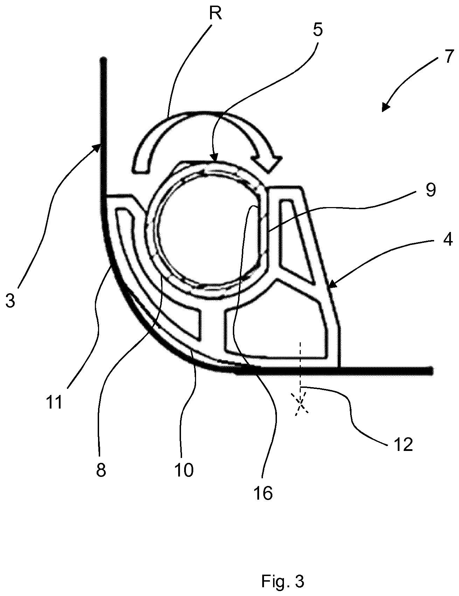

Die Fig. 2 zeigt eine schematische perspektivische Ansicht der Befestigungseinrichtung 4 und die Fig. 3 illustriert eine schematische Seitenansicht der Befestigungsanordnung 7. Im Folgenden wird auf die Fig. 2 und 3 gleichzeitig Bezug genommen.

Die Befestigungseinrichtung 4 weist einen Aufnahmeabschnitt 8 zum Aufnehmen der Leitung 5 auf. Der Aufnahmeabschnitt 8 weist einen Verdrehsicherungsabschnitt 9 auf, der ein Verdrehen der Leitung 5 relativ zu dem Aufnahmeabschnitt 8 in einer Rotationsrichtung R verhindert. Der Aufnahmeabschnitt 8 weist vorzugsweise eine zylindrische Oberfläche auf. Insbesondere weist der Aufnahmeabschnitt 8 zumindest abschnittsweise eine Kreisbogenform auf. Der Aufnahmeabschnitt 8 kann derart ausgebildet sein, dass er die Leitung 5 zumindest abschnittsweise formschlüssig umgreift. Hierzu kann die Kreisbogenform einen Kreisbogenwinkel von größer als 180° einschließen. Der Verdrehsicherungsabschnitt 9 kann eine seitliche Abflachung oder Symmetrieunterbrechung des Aufnahmeabschnittes 8 sein. Insbesondere ist der Verdrehsicherungsabschnitt 9 eine Sehne der Kreisbogenform des Aufnahmeabschnittes 8.

Vorzugsweise weist die Befestigungseinrichtung 4 einen äußeren Anschmiegeabschnitt 10 auf, der mit einer Kochmuldenwannenkontur 11 der Kochmuldenwanne 3 korrespondiert. Der Anschmiegeabschnitt 10 kann eine Kreisbogenform aufweisen. Die Befestigungseinrichtung 4 kann ein Befestigungselement 12 aufweisen, mit Hilfe dessen die Befestigungseinrichtung 4 an dem Gehäuse 2, insbesondere an der Kochmuldenwanne 3, befestigbar ist. Das Befestigungselement 12 kann eine Schraube, ein Niet, ein sich aus dem Anschmiegeabschnitt 10 heraus erstreckender Schnapphaken oder dergleichen sein. Die Befestigungseinrichtung 4 kann mehrere Befestigungselemente 12 aufweisen.

Die Befestigungseinrichtung 4 ist materialeinstückig. Die Befestigungseinrichtung 4 kann zumindest teilweise mit einem Kunststoffmaterial gefertigt sein. Vorzugsweise weist die Befestigungseinrichtung 4 zumindest eine Versteifungsrippe 13, 14 auf. Die Befestigungseinrichtung 4 kann mehrere Versteifungsrippen 13, 14 aufweisen. Die Versteifungsrippen 13, 14 versteifen die Befestigungseinrichtung 4.

Der Aufnahmeabschnitt 8 kann eine Einführschräge 15 zum Einführen der Leitung 5 in den Aufnahmeabschnitt 8 aufweisen. Die Einführschräge 15 kann beispielsweise eine Anfasung des Aufnahmeabschnittes 8 sein. Die Einführschräge 15 kann beispielsweise einen Winkel von 45° aufweisen. Der Aufnahmeabschnitt 8 und/oder der Verdrehsicherungsabschnitt 9 sind zum Einführen der Leitung 5 in den Aufnahmeabschnitt 8 vorzugsweise elastisch verformbar.

Die Leitung 5 kann einen zu dem Verdrehsicherungsabschnitt 9 korrespondierenden Eingriffsabschnitt 16 aufweisen. Vorzugsweise ist der Eingriffsabschnitt 16 eine seitliche Abflachung der Leitung 5.

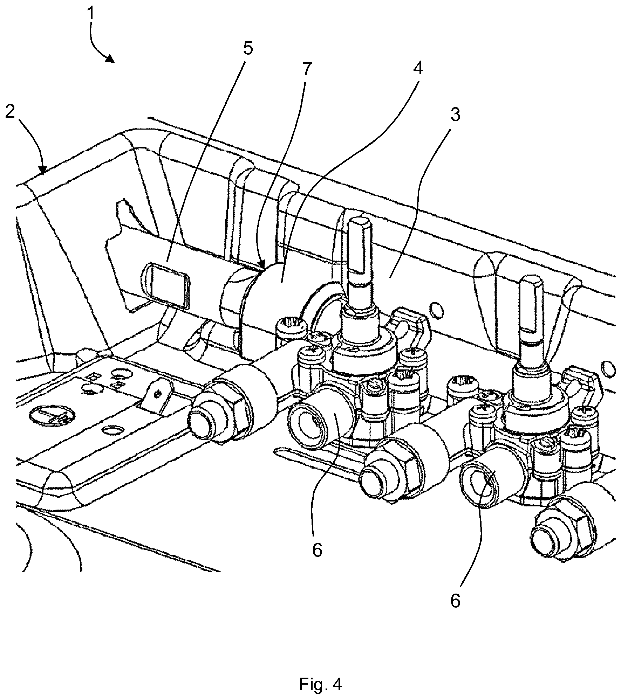

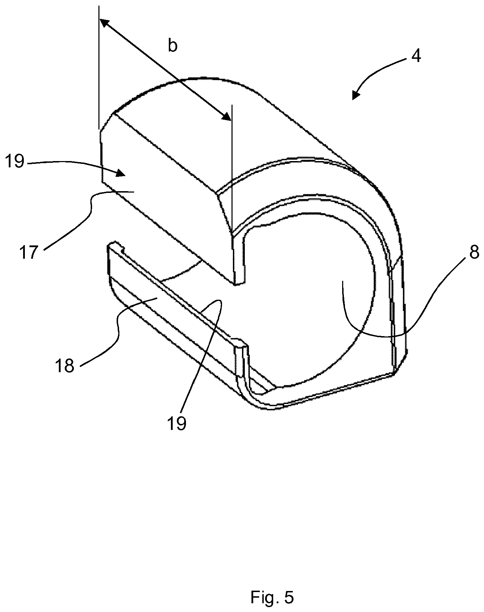

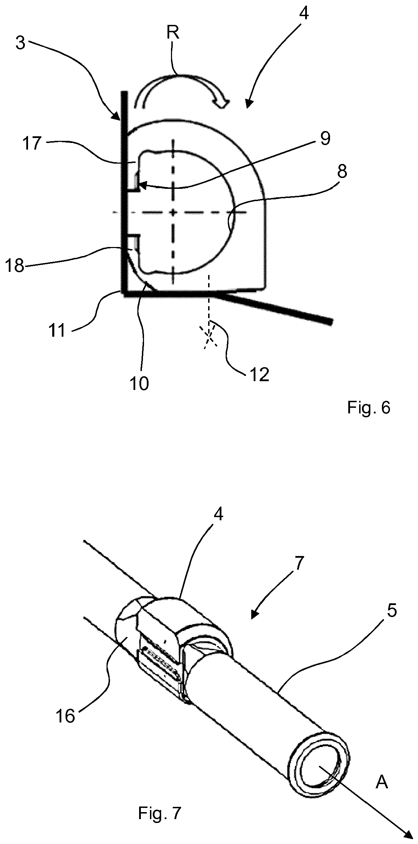

Die Fig. 4 zeigt eine schematische perspektivische Ansicht des Haushaltsgerätes 1 mit einer weiteren Ausführungsform der Befestigungseinrichtung 4. Die Fig. 5 zeigt die Befestigungseinrichtung 4 in einer perspektivischen Ansicht. Die Figur 6 zeigt die Befestigungseinrichtung 4 in einer schematischen Seitenansicht und die Fig. 7 zeigt die Befestigungsanordnung 7 in einer schematischen perspektivischen Ansicht. Im Folgenden wird auf die Fig. 4 bis 7 gleichzeitig Bezug genommen und lediglich auf die Unterschiede der Ausführungsform der Befestigungseinrichtung 4 gemäß der Fig. 4 bis 7 im Vergleich zu der Ausführungsform der Befestigungseinrichtung 4 gemäß der Fig. 1 bis 3 eingegangen.

Die Ausführungsform der Befestigungseinrichtung 4 gemäß der Fig. 4 bis 7 unterscheidet sich von der Ausführungsform der Befestigungseinrichtung 4 gemäß der Fig. 1 bis 3 im Wesentlichen dadurch, dass der Verdrehsicherungsabschnitt 9 dazu eingerichtet ist, die Leitung 5 formschlüssig zu umgreifen. Hierzu kann der Verdrehsicherungsabschnitt 9 zwei Greifarme 17, 18 aufweisen, die dazu eingerichtet sind, die Leitung 5 zumindest abschnittsweise zu umgreifen. Die Greifarme 17, 18 sind insbesondere elastisch verformbar.

Der äußere Anschmiegeabschnitt 10, der korrespondierend zu der Kochmuldenwannenkontur 11 ausgebildet ist, kann den Verdrehsicherungsabschnitt 9 aufweisen. Das heißt, der Verdrehsicherungsabschnitt 9 ist der Kochmuldenwannenkontur 11, insbesondere einer Seitenwand der Kochmuldenwannenkontur 11, zugewandt.

Der Verdrehsicherungsabschnitt 9 kann einen Greifabschnitt 19 aufweisen, der in den Eingriffsabschnitt 16 der Leitung 5 derart eingreift, dass diese in einer Axialrichtung A unverschieblich ist. Vorzugsweise weist die Befestigungseinrichtung 4 eine größere Breite b auf als die Ausführungsform der Befestigungseinrichtung 4 gemäß der Fig. 1 bis 3. Der Eingriffsabschnitt 16 kann eine mit der Leitung 5 verbundene, insbesondere verklebte, verschweißte, aufgepresste oder verlötete, Hülse sein, die eine zu dem Verdrehsicherungsabschnitt 9 korrespondierende Geometrie aufweist.

In den Ausführungsformen der Fig. 1 bis 7 ist die Befestigungseinrichtung 4 zwischen einer seitlichen Öffnung der Kochmuldenwanne 3 und den Gasregelventilen 6 innerhalb der Kochmuldenwanne 3 angeordnet. Außerdem verläuft die Hauptgasleitung 5 zwischen den Gasregelventilen 6 und einer Seitenwand der Kochmulde 7. Mit Hilfe der Befestigungsanordnung 7 wird zum Beispiel verhindert, dass bei der Montage eines Anschlussstücks an die Hauptgasleitung 5, beispielsweise einer externen Gasleitung mit einem Flansch, einer Muffe und/oder einer Überwurfmutter, ein Drehmoment von der Hauptgasleitung auf die angekoppelten Gasregelventile übertragen wird. Undichtigkeiten kann dadurch vorgebeugt werden.

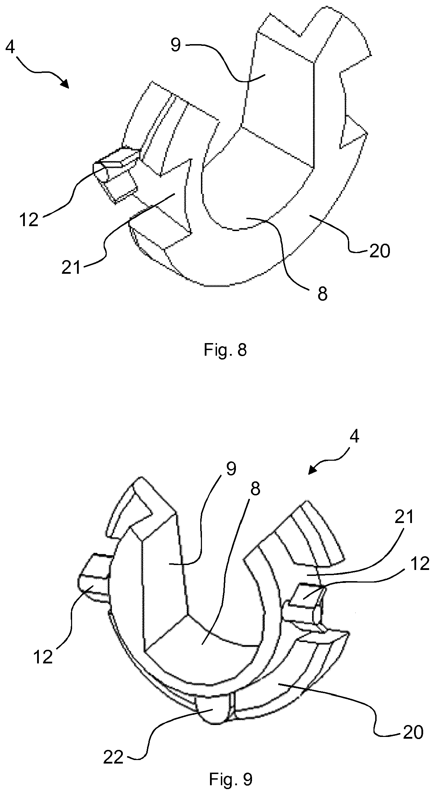

Die Fig. 8 und 9 zeigen jeweils in schematischer perspektivischer Ansicht eine erfindungsgemäße Ausführungsform der Befestigungseinrichtung 4. Die Befestigungseinrichtung 4 weist einen Aufnahmeabschnitt 8 und einen Verdrehsicherungsabschnitt 9 auf. Die Befestigungseinrichtung 4 weist vorzugsweise mehrere Befestigungselemente 12 auf, die als Schnapphaken ausgebildet sind. Insbesondere weist die Befestigungseinrichtung 4 zwei einander gegenüberliegend angeordnete Schnapphaken auf. Weiterhin umfasst die Befestigungseinrichtung einen umlaufenden Flansch 20, der dazu eingerichtet ist, außenseitig an der Kochmuldenwanne 3 aufzuliegen. Der Flansch 20 kann Ausnehmungen 21 aufweisen. In den Ausnehmungen 21 können die Befestigungselemente 12 in Form der Schnapphaken angeordnet sein. Weiterhin kann an dem Flansch 20 eine Verdrehsicherung 22 in Form einer sich aus dem Flansch 20 herauserstreckenden Vorwölbung vorgesehen sein.

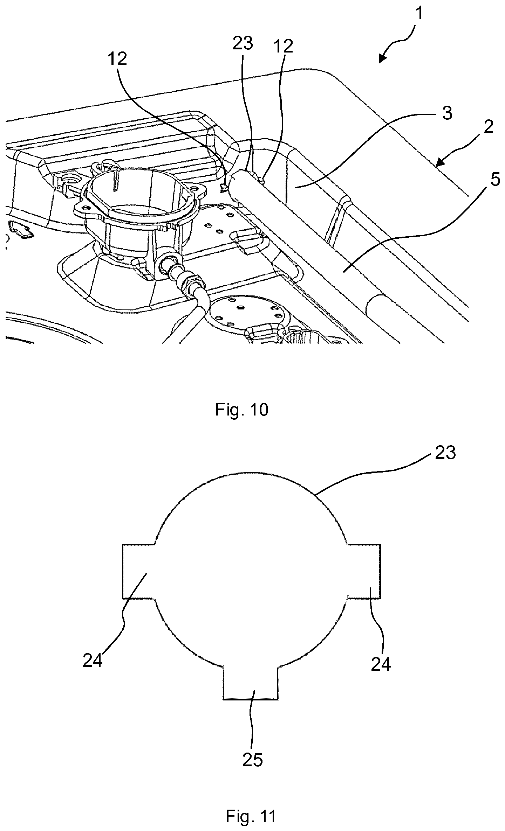

Die Fig. 10 zeigt in einer schematischen perspektivischen Ansicht eine Ausführungsform eines Haushaltsgeräts 1 mit dem Gehäuse 2 und der Kochmuldenwanne 3. Die Leitung 5 ist durch eine in der Kochmuldenwanne 3 vorgesehene Öffnung 23 hindurch geführt. Außenseitig an der Kochmuldenwanne 3 ist die Befestigungseinrichtung 4 vorgesehen. Die Befestigungselemente 12 erstrecken sich durch die Kochmuldenwanne 3 hindurch und sind mit dieser verschnappt. Hierzu können an der Kochmuldenwanne 3 entsprechende Ausnehmungen oder Durchbrüche vorgesehen sein.

Weiterhin kann die Öffnung 23, wie in Fig. 11 gezeigt, seitliche Ausnehmungen 24 aufweisen, in die die Befestigungselemente 12 einschnappbar sind. Die Öffnung 23 weist auch eine untere Ausnehmung 25 auf, in die die Verdrehsicherung 22 eingreift.

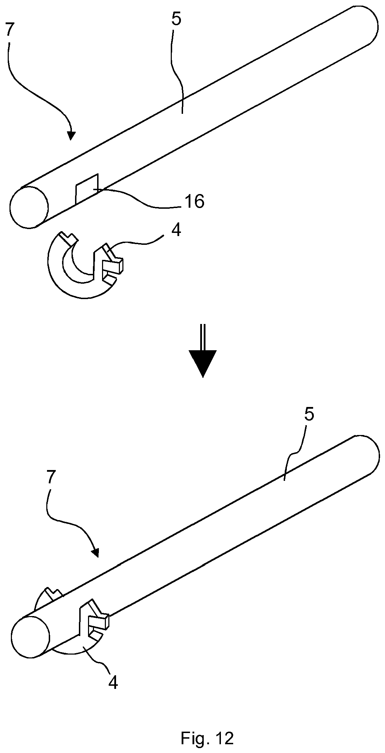

Die Fig. 12 zeigt in einer schematischen perspektivischen Ansicht die Montage einer Befestigungsanordnung 7, bei der die Befestigungseinrichtung 4 an der Leitung 5 befestigt wird. Die Befestigungseinrichtung 4 ist vereinfacht dargestellt. Die Leitung 5 weist einen Eingriffsabschnitt 16 in Form einer seitlichen Abflachung auf. In den Eingriffsabschnitt 16 greift der Verdrehsicherungsabschnitt 9 der Befestigungseinrichtung 4 ein. Insbesondere ist der Aufnahmeabschnitt 8 der Befestigungseinrichtung 4 so ausgebildet, dass die Befestigungseinrichtung 4 auf die Leitung 5 derart aufdrückbar ist, dass die Befestigungseinrichtung 4 an der Leitung 5 fixiert und/oder auf diese aufgeschnappt ist.

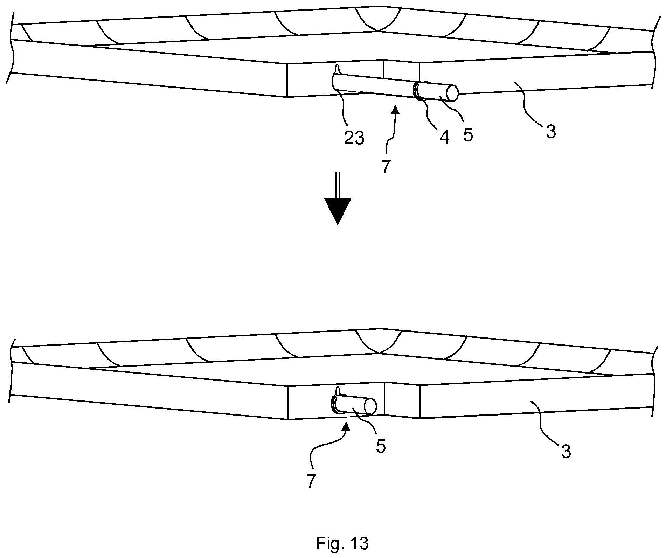

Wie die Fig. 13 zeigt, wird anschließend die Leitung 5 mit der aufgeschnappten Befestigungseinrichtung 4 durch die Öffnung 23 der Kochmuldenwanne 3 eingeschoben. Hierbei verschnappen die Befestigungselemente 12 mit der Kochmuldenwanne 3. Die Abflachung bzw. der Eingriffsabschnitt 16 ist dabei von der Öffnung 23 der Kochmuldenwanne 3 umschlossen. Die durch die Öffnung 23 geführte Leitung 5 ist mit Hilfe des Verdrehsicherungsabschnitts 9 verdrehfest gegenüber der Befestigungseinrichtung 4 montierbar, wobei die Befestigungseinrichtung 4 wiederum mit Hilfe der Befestigungselemente 12 verdrehfest an der Kochmuldenwanne 3 befestigt ist. Hierdurch wird eine Verdrehung der Leitung 5 gegenüber der Kochmuldenwanne 3 auch dann zuverlässig verhindert wenn an die Leitung 5 z.B. ein Anschlussstutzen zur Verbindung der Leitung 5 mit dem Gasnetz angeschraubt wird. Ein Verdrehen der Leitung 5 bei der Montage des Anschlussstutzens wird so wirkungsvoll unterbunden. In der Orientierung der Fig. 13 sind oberhalb der Hauptgasleitung 5 und oberhalb der Muldenwanne 3 seitliche Bedienelemente an die Gasregelventile angebracht (nicht dargestellt). Einem Bediener läuft die Hauptgasleitung 5 innerhalb der Kochmuldenwanne 3 seitlich rechts entgegen.

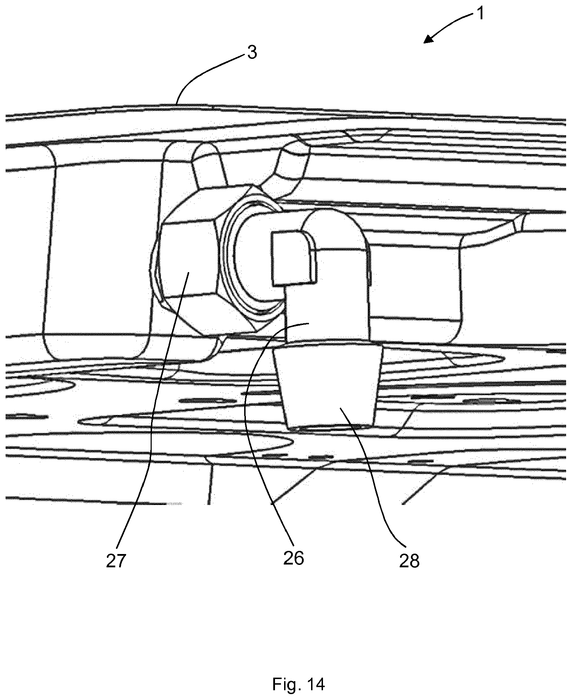

Die Fig 14 zeigt eine vergrößerte perspektive Ansicht der Kochmuldenwanne 3. Der Blickwinkel auf die Kochmuldenwanne 3 entspricht dabei dem Blickwinkel gemäß der Fig. 13. An der in der Fig. 14 nicht gezeigten Leitung 5 ist ein Winkelstück 26 mit Hilfe einer Überwurfmutter 27 befestigt. Das Winkelstück 26 ist mittels eines konusförmigen Anschlussflansches 28 beispielsweise mit einer Gaszuleitung verbindbar. Das Winkelstück 26 leitet den Gasstrom um 90° um.

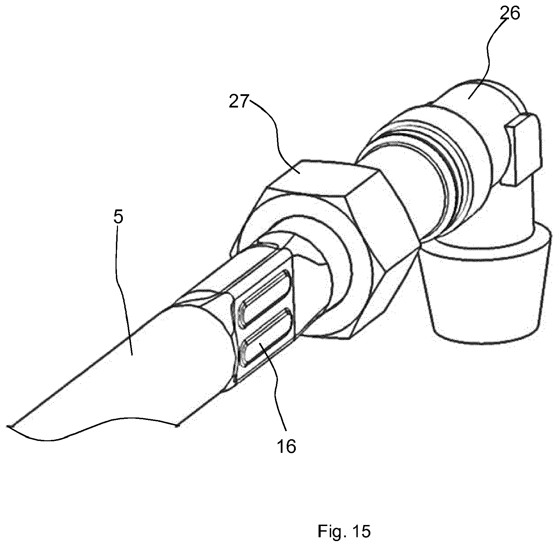

Die Fig. 15 zeigt eine vergrößerte perspektivische Ansicht der Leitung 5. Mit Hilfe der Überwurfmutter 27 wird das Winkelstück 26 an die Leitung 5 angeschraubt. Ein auf die Überwurfmutter 27 aufgebrachtes Drehmoment wird von der Überwurfmutter 27 auf die Leitung 5 und von der Leitung 5 mit Hilfe des Eingriffsabschnitts 16 der Leitung 5 auf die in der Fig. 15 nicht gezeigte Befestigungseinrichtung 4 übertragen. Da die Befestigungseinrichtung 4 drehfest an der Kochmuldenwanne 3 befestigt ist, wird das Drehmoment von der Befestigungseinrichtung 4 auf die Kochmuldenwanne 3 übertragen. Hierdurch wird bei der Montage des Winkelstücks 26 zuverlässig ein Verdrehen der Leitung 5 gegenüber der Kochmuldenwanne 3 verhindert.

**Verwendete Bezugszeichen:**

| | | | |
|---|---|---|---|
| 1 | Haushaltsgerät | | |
| 2 | Gehäuse | | |
| 3 | Kochmuldenwanne | | |
| 4 | Befestigungseinrichtung | | |
| 5 | Leitung | | |
| 6 | Gasregelventil | | |
| 7 | Befestigungsanordnung | | |
| 8 | Aufnahmeabschnitt | | |
| 9 | Verdrehsicherungsabschnitt | | |
| 10 | Anschmiegeabschnitt | | |
| 11 | Kochmuldenwannenkontur | | |
| 12 | Befestigungselement | | |
| 13 | Versteifungsrippe | | |
| 14 | Versteifungsrippe | | |
| 15 | Einführschräge | | |
| 16 | Eingriffsabschnitt | | |
| 17 | Greifarm | | |
| 18 | Greifarm | | |
| 19 | Greifabschnitt | | |
| 20 | Flansch | | |
| 21 | Ausnehmung | | |
| 22 | Verdrehsicherung | | |
| 23 | Öffnung | | |
| 24 | Ausnehmung | | |
| 25 | Ausnehmung | | |
| 26 | Winkelstück | | |
| 27 | Überwurfmutter | | |
| 28 | Anschlussflansch | | |
| A | Axialrichtung | | |
| b | Breite | | |
| | | R | Rotationsrichtung |

## Patentansprüche

1. Gasherd (1) mit einer Kochmuldenwanne (3) und einer Befestigungsanordnung (7) mit einer Hauptgasleitung (5) und einer Befestigungseinrichtung (4) zum verdrehsicheren Befestigen der Hauptgasleitung (5) an der Kochmuldenwanne (3), wobei die Befestigungseinrichtung (4) einen Aufnahmeabschnitt (8) zum Aufnehmen der Hauptgasleitung (5) umfasst, wobei der Aufnahmeabschnitt (8) einen Verdrehsicherungsabschnitt (9) aufweist, der ein Verdrehen der Hauptgasleitung (5) relativ zu dem Aufnahmeabschnitt (8) verhindert, **dadurch gekennzeichnet, dass** die Befestigungseinrichtung (4) außenseitig an der Kochmuldenwanne (3) befestigt ist, wobei die Hauptgasleitung (5) durch eine an der Kochmuldenwanne (3) vorgesehene Öffnung (23) hindurchgeführt ist, und wobei die Befestigungseinrichtung (4) von außen in die Öffnung (23) eingeschnappt ist.

2. Gasherd nach Anspruch 1, **dadurch gekennzeichnet, dass** der Aufnahmeabschnitt (8) zumindest abschnittsweise eine Kreisbogenform aufweist.

3. Gasherd nach Anspruch 2, **dadurch gekennzeichnet, dass** der Verdrehsicherungsabschnitt (9) eine Sehne der Kreisbogenform des Aufnahmeabschnitts (8) ist.

4. Gasherd nach einem der Ansprüche 1 - 3, ferner mit zumindest einem Befestigungselement (12) zum Befestigen der Befestigungseinrichtung (4) an der Kochmuldenwanne (3).

5. Gasherd nach Anspruch 4, **dadurch gekennzeichnet, dass** das Befestigungselement (12) ein Schnapphaken ist.

6. Gasherd nach einem der Ansprüche 1 - 5, **gekennzeichnet durch** zumindest eine Versteifungsrippe (13, 14) zum Versteifen der Befestigungseinrichtung (4).

7. Gasherd nach einem der Ansprüche 1 - 6, **dadurch gekennzeichnet, dass** der Aufnahmeabschnitt (8) zumindest eine Einführschräge (15) zum Einführen der Hauptgasleitung (5) in den Aufnahmeabschnitt (8) aufweist.

8. Gasherd nach einem der Ansprüche 1 - 7, **dadurch gekennzeichnet, dass** der Verdrehsicherungsabschnitt (9) dazu eingerichtet ist, die Hauptgasleitung (5) formschlüssig zu umgreifen.

9. Gasherd nach Anspruch 8, **dadurch gekennzeichnet, dass** der Verdrehsicherungsabschnitt (9) zwei Greifarme (17, 18) aufweist, die dazu eingerichtet sind, die Hauptgasleitung (5) zumindest abschnittsweise zu umgreifen.

10. Gasherd nach einem der Ansprüche 1 - 9, **dadurch gekennzeichnet, dass** der Aufnahmeabschnitt (8) und/oder der Verdrehsicherungsabschnitt (9) elastisch verformbar sind.

11. Gasherd nach einem der Ansprüche 1 - 10, **dadurch gekennzeichnet, dass** die Hauptgasleitung (5) einen zu dem Verdrehsicherungsabschnitt (9) korrespondierenden Eingriffsabschnitt (16) aufweist.

## Claims

1. Gas stove (1) with a stovetop tub (3) and a securing arrangement (7) with a main gas line (5) and a securing device (4) for securing the main gas line (5) to the stovetop tub (3) in a rotationally secure manner, wherein the securing device (4) comprises a receiving segment (8) for receiving the main gas line (5), wherein the receiving segment (8) has an anti-rotation segment (9) which prevents the main gas line (5) from rotating relative to the receiving segment (8), **characterised in that** the securing device (4) is secured on the outside to the stovetop tub (3), wherein the main gas line (5) is passed through an opening (23) provided on the stovetop tub (3), and wherein the securing device (4) is snap-fitted into the opening (23) from the outside.

2. Gas stove according to claim 1, **characterised in that** the receiving segment (8) has at least one circular arc form at least in sections.

3. Gas stove according to claim 2, **characterised in that** the anti-rotation segment (9) is a chord of the circular arc form of the receiving segment (8).

4. Gas stove according to one of claims 1-3, further having at least one securing element (12) for securing the securing device (4) to the stovetop tub (3).

5. Gas stove according to claim 4, **characterised in that** the securing element (12) is a snap-fit hook.

6. Gas stove according to one of claims 1 - 5, **characterised by** at least one reinforcing rib (13, 14) for reinforcing the securing device (4).

7. Gas stove according to one of claims 1 - 6, **characterised in that** the receiving segment (8) has at least one inclined insertion surface (15) for inserting the main gas line (5) into the receiving segment (8).

8. Gas stove according to one of claims 1 - 7, **characterised in that** the anti-rotation segment (9) is designed to surround the main gas line (5) in a form-fit manner.

9. Gas stove according to claim 8, **characterised in that** the anti-rotation segment (9) has two gripper arms (17, 18), which are designed to surround the main gas line (5) at least in sections.

10. Gas stove according to one of claims 1 - 9, **characterised in that** the receiving segment (8) and/or the anti-rotation segment (9) are elastically deformable.

11. Gas stove according to one of claims 1 - 10, **characterised in that** the main gas line (5) has an engaging segment (16) which corresponds to the anti-rotation segment (9).

## Revendications

1. Cuisinière à gaz (1) comprenant un bac de plaque de cuisson (3) et un agencement de fixation (7) doté d'une conduite de gaz principale (5) et d'un dispositif de fixation (4) destiné à fixer la conduite de gaz principale (5) sur le bac de plaque de cuisson (3) de manière empêchant la torsion, le dispositif de fixation (4) comprenant une section de logement (8) destinée à loger la conduite de gaz principale (5), la section de logement (8) présentant une section anti-torsion (9) qui empêche une torsion de la conduite de gaz principale (5) par rapport à la section de logement (8), **caractérisée en ce que** le dispositif de fixation (4) est fixé côté extérieur sur le bac de plaque de cuisson (3), la conduite de gaz principale (5) étant menée à travers une ouverture (23) ménagée sur le bac de plaque de cuisson (3), et le dispositif de fixation (4) étant encliqueté dans l'ouverture (23) depuis l'extérieur.

2. Cuisinière à gaz selon la revendication 1, **caractérisée en ce que** la section de logement (8) présente au moins par endroits une forme en arc de cercle.

3. Cuisinière à gaz selon la revendication 2, **caractérisée en ce que** la section anti-torsion (9) est une corde de la forme en arc de cercle de la section de logement (8).

4. Cuisinière à gaz selon l'une quelconque des revendications 1 à 3, comprenant en outre au moins un élément de fixation (12) destiné à fixer le dispositif de fixation (4) sur le bac de plaque de cuisson (3).

5. Cuisinière à gaz selon la revendication 4, **caractérisée en ce que** l'élément de fixation (12) est un crochet d'encliquetage.

6. Cuisinière à gaz selon l'une quelconque des revendications 1 à 5, **caractérisée par** au moins une nervure de renforcement (13, 14) destinée à renforcer le dispositif de fixation (4).

7. Cuisinière à gaz selon l'une quelconque des revendications 1 à 6, **caractérisée en ce que** la section de logement (8) présente au moins un chanfrein d'insertion (15) destiné à insérer la conduite de gaz principale (5) dans la section de logement (8).

8. Cuisinière à gaz selon l'une quelconque des revendications 1 à 7, **caractérisée en ce que** la section anti-torsion (9) est configurée pour entourer la conduite de gaz principale (5) par adhérence de forme.

9. Cuisinière à gaz selon la revendication 8, **caractérisée en ce que** la section anti-torsion (9) présente deux bras de préhension (17, 18) qui sont conçus pour entourer la conduite de gaz principale (5) au moins par endroits.

10. Cuisinière à gaz selon l'une quelconque des revendications 1 à 9, **caractérisée en ce que** la section de logement (8) et/ou la section anti-torsion (9) sont élastiquement déformables.

11. Cuisinière à gaz selon l'une quelconque des revendications 1 à 10, **caractérisée en ce que** la conduite de gaz principale (5) présente une section de prise (16) correspondant à la section anti-torsion (9).
